# EUROPÄISCHE PATENTSCHRIFT

(11) **EP 1 592 950 B1**
(45) Veröffentlichungstag und Bekanntmachung des Hinweises auf die Patenterteilung: **29.06.2016**
(21) Anmeldenummer: 04710381.7
(22) Anmeldetag: 12.02.2004
(51) Int. Cl.: G01F 1/58

(54) **MONTAGEPAKET FÜR DIE HERSTELLUNG EINES MAGNETISCH-INDUKTIVEN DURCHFLUSSMESSERS**
ASSEMBLY PACK FOR THE PRODUCTION OF A MAGNETIC-INDUCTIVE FLOWMETER
ENSEMBLE DE MONTAGE POUR PRODUIRE UN DEBITMETRE MAGNETO-INDUCTIF

(30) Priorität: 14.02.2003 DE 10306522
(43) Veröffentlichungstag der Anmeldung: 09.11.2005
(73) Patentinhaber: Endress + Hauser Flowtec AG, 4153 Reinach (CH)
(72) Erfinder: KAPPERTZ, Fred, 4146 Hochwald (DE); MAGLIOCCA, Antonio, 4055 Basel (CH); VOIGT, Frank, 79576 Weil am Rhein (DE)
(74) Vertreter: Andres, Angelika Maria
(86) Internationale Anmeldenummer: PCT/EP2004/001311
(87) Internationale Veröffentlichungsnummer: WO 2004/072590

(56) Entgegenhaltungen:
- EP-A- 0 120 145
- EP-A- 0 309 932
- EP-A- 0 990 876
- EP-A- 1 207 374
- WO-A-00/47954
- WO-A1-86/05873
- DE-A- 4 427 936
- DE-A- 19 535 997
- US-A- 4 825 703

## Beschreibung

Die Erfindung betrifft ein Montagepaket für die Herstellung eines magnetisch-induktiven Durchflußaufnehmers, insb. einer Magnetfeld-Anordnung für ein Magnetfeld-System desselben.

Mit magnetisch-induktiven Durchflußmessern läßt sich bekanntlich der Volumen-Durchfluß einer in einer Rohrleitung fließenden, elektrisch leitenden Flüssigkeit messen.

Magnetisch-induktive Durchflußmesser umfassen üblicherweise einen Durchflußaufnehmer mit einem Meßrohr, einer daran befestigten Magnetfeld-Anordnung zum Erzeugen eines die Flüssigkeit durchsetzenden Magnetfelds sowie am Meßrohr angebrachte potentialabgreifende Meßelektroden, vgl. hierzu insb. auch die EP-A 10 39 269, die US-A 56 46 353, US-A 55 42 301, US-A 53 85 055, US-A 53 51 554, US-A 50 90 250, US-A 48 25 703, US-A 46 79 442, US-A 43 29 879, US-A 43 58 963, US-A 43 88 834, US-A 44 20 982, US-A-44 97 212, US-A 46 31 969, US-A 45 39 853, US-A 45 67 775.

Das in die Rohrleitung flüssigkeitsdicht, z.B. mittels Flanschen oder Verschraubungen, eingesetzte Meßrohr des Durchflußaufnehmers ist üblicherweise nicht-ferromagnetisch. Damit solche Spannungen, die nach dem Faraday'schen Induktionsgesetz in der strömenden, vom Magnetfeld durchsetzten Flüssigkeit induziert werden, nicht über das Meßrohr kurzgeschlossen werden, ist der die Flüssigkeit berührende Teil des Meßrohrs üblicherweise elektrisch nicht-leitend gehalten.

Metall-Meßrohre sind daher innen zumeist mit einer elektrisch nicht-leitenden Schicht, z.B. aus Hartgummi, Polyfluorethylen etc., versehen und auch i.a. nicht-ferromagnetisch; bei vollständig aus einem Kunststoff oder aus einer Keramik, insb. aus Aluminiumoxid-Keramik, bestehenden Meßrohren ist die elektrisch nicht-leitende Schicht demgegenüber nicht erforderlich.

Das Magnetfeld wird zumeist mittels wenigstens zweier Feldspulen der Magnetfeld-Anordnung erzeugt, von denen im häufigsten Fall jede auf einem gedachten Durchmesser des Meßrohrs von außen an letzterem angeordnet ist. Jede der Feldspulen ist üblicherweise um einen weichmagnetischen Spulenkern gewickelt, wobei die Spulenkerne ihrerseits über entsprechende, außerhalb des Meßrohrs verlaufende Rückführungen miteinander magnetisch gekoppelt sind.

Damit das von den Feldspulen erzeugte Magnetfeld möglichst homogen ist, sind diese vorzugsweise zueinander baugleich ausgebildet und zumeist auch elektrisch gleichsinnig in Serie geschaltet, sodaß sie im Betrieb von demselben Erregerstrom durchflossen werden können. Es ist jedoch auch schon beschrieben worden, die Feldspulen abwechselnd gleich- bzw. gegensinnig vom selben Erregerstrom durchfließen zu lassen, vgl. hierzu auch die US-A 56 46 353, um dadurch beispielsweise auch die Viskosität und/oder den Fließindex der hindurchströmenden Flüssigkeit messen zu können.

Neben dem Durchflußaufnehmer umfaßt ein solcher Durchflußmesser eine mit dem Durchflußaufnehmer gekoppelte Meß- und Betriebs-Elektronik, die einerseits dazu dient die Magnetfeld-Anordnung anzusteuern und mit der erforderlichen Energie für das Magnetfeld zu versorgen, und die andererseits die mittels der Meßelektroden vom Fluid abgegriffene, strömungsabhängige Meßspannung in entsprechende Meßwerte, z.B. einen Volumen-DurchflußMeßwert, umformt.

Im häufigsten Fall sind die ebenfalls vorzugsweise baugleichen Meßelektroden diametral einander gegenüberliegend so angeordnet, dass ihr gemeinsamer Durchmesser senkrecht zur Richtung des Magnetfelds und somit senkrecht zum Durchmesser ist, auf dem die Spulen liegen. Dementsprechend können für solch einen Durchflußaufnehmer drei Hauptachsen bestimmt werden, von denen eine erste eine Längsachse des Meßrohrs, eine zweite durch den gemeinsamen Durchmesser der Feldspulen und eine dritte durch gemeinsamen Durchmesser der Meßelektroden gebildet sind. Darüber hinaus sind Durchflußaufnehmer der beschriebenen Art üblicherweise so aufgebaut, daß sie bezüglich der drei genannten Hauptachsen, die üblicherweise auch mit den drei Trägheitshauptachsen des Durchflußaufnehmers im wesentlichen übereinstimmen, weitgehend c2-symmetrisch aufgebaut sind (c2-symmetrisch = rotations-symmetrisch bei einem Drehwinkel von 180°).

Bei die Herstellung magnetisch induktiver Durchflußaufnehmer sind zum Zwecke der Reduktion von Lagerhaltungs- oder Transportkosten bislang stets einzelne, jedoch paarweise zusammengehörige, baugleiche System-Elemente, insb. paarweise zusammengehörige Spulen-Elemente für die Herstellung der Magnetfeld-Anordnung, verwendet worden.

Dies hat sich jedoch, insb. bei manueller Montage einer Magnetfeld-Anordnung, in zunehmendem Maße als nachteilig im Hinblick auf eine möglichst kurze Montagezeit bei gleichzeitiger geforderter hoher Produktionsqualität und Produktionseffizienz herausgestellt, insb. dann, wenn der Meßaufnehmer, wie z.B. in der US-B 64 53 753 gezeigt, im späteren Betrieb eine bevorzugte oder aber auch nur eine einzige Meßrichtung aufweisen soll.

Zur Erzeugung des im Meßbetrieb erforderlichen Magnetfelds müssen die Feldspulen nämlich einerseits stets in einer durch die periphere Beschaltung und den Wicklungssinn vorbestimmten richtigen Einbaulage am Meßrohr angeordnet sein. Andererseits ist bei einem Meßaufnehmer mit einer ausgewiesenen Meßrichtung durch richtigen Einbau sowohl der Spulen-Elemente als auch in davon abhängiger Weise der Meßelektroden-Elemente sowie eine richtige Verschaltung der System-Elemente sicherzustellen, daß allfällige fertigungsbedingte Kanten, Absätze an der dem Fluid zugewandten Innenseite des Meßrohrs oder in ähnlicher Weise die Strömung störende Strömungshindernisse, wie z.B. Grate im Liner, wenn überhaupt, in Strömungsrichtung gesehen lediglich nach den Meßelektroden auftreten.

Anders gesagt, obwohl bei herkömmlichen Durchflußaufnehmern allein im Hinblick auf die Montage zwei oder mehrer Einbaukonstellationen möglich sind, ist für den spezifizierten Meßbetrieb üblicherweise nur eine einzige zulässig oder gewünscht.

Bei im wesentlichen baugleichen oder visuell praktisch nicht mehr ohne weiteres voneinander unterscheidbaren Spulen-Elementen besteht aber somit ein erhöhtes Risiko, diese in falscher Einbaulage am Meßrohr-Element anzubringen, wodurch die Magnetfeld-Anordnung im Hinblick auf die Montagespezifikation zumindest fehlerbehaftet ist. Dies kann dazu führen, daß der montierte Durchflußaufnehmer nachträglich überholt werden muß, beispielsweise durch eine entsprechende Rekonfigurierung der Meßgerät-Elektronik oder durch neuerliche Montage der Magnetfeld-Anordnung. Während letzterer Fall eine Erhöung des Montageaufwandes bedeuten würde, würde der erstere der beiden Fälle Maßnahmen in der Meßgerät-Elektronik erfordern, die ein schnelles und sicheres Anpassen der selben an die tatsächliche Variante der jeweils montierten Magnetfeld-Anordnung erfordern.

Die WO-A 86/05873 beschreibt einen Messwertaufnehmer für magnetisch-induktive Durchflussmessgeräte. Durch Schnappriegel wird eine Wickelspule, die auf zwei halbförmige Spulenteile unterteilt und um den Spulenkern gelegt ist, mit diesem Spulenkern verbunden. Für eine vereinfachte Befestigung der Magnetspulen am Stahlgehäuse sind am Kopfende des Spulenkerns flanschartige Arme angebracht. Ein sicheres Unterscheiden der Spulenelemente ist nicht möglich.

Die US-A 48 25 703 beschreibt einen magnetisch-induktiven Durchflußmesser, welcher zwei Halbschalengehäuse besitzt, wobei die Spulen zur Magnetfelderzeugung einstellbar an die Halbschalengehäuse anbringbar sind. Die Gehäuse sind zwar durch Erhebungen auf einfache Art und Weise an dem Messrohr anbringbar, jedoch nicht verwechslungssicher.

Es ist daher eine Aufgabe der Erfindung, die Montage der Magnetfeld-Anordnung dahingehend zu verbessern, daß sie zum einen einfach montierbar und zum anderen in einem einzigen vorgegebenen, insb. mit einer einzigen Meßrichtung des Meßaufnehmers korrespondierenden, Einbausinn verwechslungssicher zusammenzubauen ist.

Zur Lösung dieser Aufgabe besteht die Erfindung in einem Montagepaket für die Herstellung eines magnetisch-induktiven Durchflußaufnehmers, insb. einer Magnetfeld-Anordnung für ein Magnetfeld-System, welches Montagepaket zumindest folgende System-Elemente umfaßt:
- ein erstes und ein zweites Spulen-Element sowie
- ein Meßrohr-Element, wobei am Meßrohr-Element Einbaustellen für wenigstens ein Paar zusammengehöriger, komplementärer System-Elemente vorgesehen sind, und
- wobei am Meßrohr-Element (10) Einbaustellen (10a, 10b; 10c, 10d) für wenigstens ein Paar zusammengehöriger, komplementärer System-Elemente (21, 22; 41, 42) vorgesehen sind,
- wobei jedes der beiden Spulen-Elemente (21, 22) jeweils einen von Spulendraht umwickelten Wicklungskörper (211, 221) aufweist, wobei jedem der Wicklungskörper (211, 221) an einem Ende ein das jeweilige Spulen-Element (21, 22) jeweils an die zugehörige Einbaustelle des Meßrohr-Elements (10) adaptierender Spulensattel (211 a, 221 a) angeformt ist,
- wobei zur Fixierung der Spulen-Elemente (21, 22) jedem der Spulensattel (211 a, 221 a) wenigstens ein Rasthaken (211 b, 221 b) angeformt sowie eine mit dem jeweils wenigstens einen Rasthaken des jeweils anderen Spulensattels korrespondierende Ausnehmung (211c, 221 c) eingeformt sind, und
- wobei die Rasthaken (211 b, 221 b) und die jeweils zugeordnete Ausnehmung (221 c, 211 c) so angeordnet und ausgebildet sind, daß im zusammengebauten Zustand des Durchflußaufnehmers (1) jeweils der wenigstens eine Rasthaken des einen Spulensattels von der jeweils korrespondierenden Ausnehmung des jeweils anderen Spulensattels so aufgenommen ist, daß Rasthaken und korrespondierende Aufnehmung im wesentlichen formschlüssig ineinander greifen.

Nach einer ersten Variante der Erfindung umfaßt das Montagepaket weiters ein erstes und ein zweites Feldrückführ-Element, wobei am ersten und am zweiten Spulen-Element Auflageflächen für die Feldrückführ-Elemente vorgesehen sind und wobei jedes der wenigstens zwei Feldrückführ-Elemente so ausgebildet ist, daß es im eingebauten Zustand auf jeweils einer Auflagefläche sowohl des ersten als auch des zweiten Spulen-Elements aufliegend, zumindest abschnittsweise elastisch gespannt ist und so die Spulen-Elemente mittels der Feldrückführ-Elemente gegen das Meßrohr-Element gedrückt gehalten werden.

Gemäß einer zweiten Variante der Erfindung weisen die beiden Spulen-Elemente einen gemeinsamen, durchgehenden Spulendraht auf, der sowohl wenigstens eine Wicklung des ersten Spulen-Elements als auch wenigstens eine Wicklung des zweiten Spulen-Elements bildet.

Im weiteren sind gemäß einer dritten Variante der Erfindung wenigstens zwei paarweise zusammengehörige Einbaustellen und wenigstens zwei paarweise zusammengehörige System-Elemente so ausgebildet oder geformt, daß in jede der wenigstens zwei Einbaustellen wenigstens eines von zwei paarweise zusammengehörigen System-Elemente in nur einer einzigen vorbestimmten Einbaulage und/oder mit einer einzigen vorbestimmten Orientierung einsetzbar ist.

Nach einer bevorzugten ersten Ausgestaltung der Erfindung weist das Meßrohr-Element zumindest eine Trägheitshauptachse auf, bezüglich der es im wesentlichen asymmetrisch ausgebildet ist.

Nach einer bevorzugten zweiten Ausgestaltung der Erfindung sind wenigstens zwei paarweise zusammengehörige Einbaustellen des Meßrohr-Elements jeweils auf einem im wesentlichen zylindrischen Abschnitt eines Mantels des Meßrohr-Elements angeordnet und weisen wenigstens diese zwei paarweise zusammengehörige Einbaustellen jeweils eine in den Mantel des Meßrohr-Elements eingebrachte Aussparung, insb. eine Öffnung, auf, wobei die beiden, insb. einander diametral gegenüberliegenden, Aussparungen mit einer gedachten Querschnittsachse des Meßrohr-Elements fluchten, die zu einer gedachten Mittel-Querschnittsachse des zylindrischen Abschnitts parallel verläuft und von dieser gedachten Mittel-Querschnittsachse seitlich beabstandet ist.

Nach einer bevorzugten dritten Ausgestaitung der Erfindung weist das Meßrohr-Element zumindest eine erste Einbaustelle für das erste Spulen-Element und eine zweite Einbaustelle für das zweite Spulen-Element auf.

Nach einer bevorzugten vierten Ausgestaltung der Erfindung sind dem ersten sowie dem zweiten Wicklungskörper jeweils Auflageflächen für Feldrückführ-Elemente angeformt.

Nach einer bevorzugten fünften Ausgestaltung der Erfindung weist das Meßrohr-Element zumindest zwei Trägheitshauptachsen auf, bezüglich denen es asymmetrisch ausgebildet ist.

Nach einer bevorzugten ersten Weiterbildung der Erfindung umfaßt das Montagepaket als weitere System-Elemente ferner ein erstes und ein zweites Elektroden-Element.

Nach einer bevorzugten zweiten Weiterbildung der Erfindung umfaßt das Montagepaket weiters ein erstes und ein zweites Spulenkern-Element.

Nach einer bevorzugten sechsten Ausgestaltung der ersten Variante der Erfindung ist jedes der wenigstens zwei Rückführ-Elemente einstückig ausgebildet.

Nach einer bevorzugten siebten Ausgestaltung der ersten Variante der Erfindung ist jedes der wenigstens zwei Rückführ-Elemente im wesentlichen ringförmig ausgebildet.

Nach einer bevorzugten achten Ausgestaltung der ersten Variante der Erfindung ist jedes der wenigstens zwei Rückführ-Elemente als in sich geschlossenes Band ausgebildet.

Nach einer bevorzugten neunten Ausgestaltung der ersten Variante der Erfindung, bei der das Montagepaket weiters oben genanntes erstes und ein zweites Spulenkern-Element umfaßt, sind die wenigstens zwei Rückführ-Elemente mittels eines ersten Befestigungs-Element mit dem ersten Spulenkern-Element und mittels eines zweiten Befestigungs-Element mit dem zweiten Spulenkern-Element kraftschlüssig verbunden.

Nach einer bevorzugten siebenten Ausgestaltung der dritten Variante der Erfindung sind wenigstens zwei paarweise zusammengehörige Einbaustellen und wenigstens zwei paarweise zusammengehörige System-Elemente so ausgebildet oder geformt, daß das jeweils erste der beiden System-Elemente nur in eine erste der Einbaustellen und das jeweils zweite der beiden System-Elemente nur in eine zweite der Einbaustellen einsetzbar sind.

Ein Grundgedanke der Erfindung besteht darin, ein montagefreundliches Montagepaket, insb. auch mit einer schnell montierbaren, Magnetfeld-Anordnung, zu schaffen, das geeignet ist, Montagefehler aufgrund allfälliger Verwechslungen optisch praktisch gleicher Bauteile eines Paar zusammengehöriger System-Elemente weitgehend auszuschließen oder sogar völlig zu vermeiden.

Ein Vorteil der Erfindung besteht darin, daß aufgrund der Ausformung der Einbaustellen und der System-Elemente, insb. in Kombination mit der asymmetrischen Ausgestaltung des Meßrohr-Elements, nicht nur die visuelle, sondern auch die haptische Wahrnehmung des Montagepersonals angesprochen wird und so auch im Falle eines fehlerhaften Einbauversuchs eine sehr direkte und somit sehr rasche Rückmeldung erfolgen kann.

Darüber hinaus besteht ein Vorteil der Erfindung darin, daß ein einheitlicher und eindeutig reproduzierbarer Meßaufnehmer praktisch ohne Variationen im Aufnehmeraufbau gefertigt werden kann, wodurch sich der Kalibrieraufwand im Vergleich zu herkömmlichen Meßaufnehmern deutlich reduzieren lässt. Beispielsweise kann so ggf. auf solche Kalibriermaßnahmen verzichtet werden, die im wesentlichen der Feststellung oder der Verifizierung der tatsächlich montierten Konfiguration oder Variante des Messaufnehmers dienen.

Das Verfahren der Erfindung und weitere Vorteile werden nun anhand von in den Figuren der Zeichnung dargestellten Ausführungsbeispielen näher erläutert.
- Fig. 1: zeigt schematisch einen magnetisch-induktiven Durchflußaufnehmer perspektivisch in einer Seitenansicht,
- Fig. 2: zeigt eine teilweise montierte Magnetfeldanordnung sowie eine Messelektroden-Anordnung des Durchflußaufnehmers perspektivisch in einer Seitenansicht,
- Fig. 3a, 3b: zeigen den Durchflußaufnehmer von Fig. 1 geschnitten in einer ersten und einer zweiten Seitenansicht teilweise montiert,
- Fig. 4: zeigt System-Elemente eines zur Herstellung des Durchflußaufnehmers von Fig. 1 geeigneten Montage-Packets perspektivisch in einer Explosionsdarstellung und
- Fig. 5: zeigt ein Meßrohr-Element sowie Wicklungskörper von Spulen-Elementen des Montage-Packets gemäß Fig. 3.

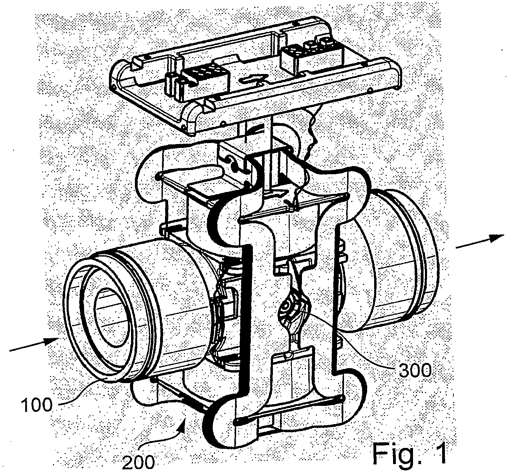

In der Fig. 1 ist ein Ausführungsbeispiel für einen in den Verlauf einer eine Flüssigkeit führenden - hier nicht gezeigten - Rohrleitung einsetzbaren Durchflußaufnehmer 1 eines magnetisch-induktiven Durchflußmessers in einer perspektivischen Ansicht dargestellt. Vorzugsweise ist der Durchflußaufnehmer 1 so ausgelegt, daß er eine ausgewiesene, insb. einzige, Meßrichtung aufweist, in der die Flüssigkeit betriebsgemäß hindurchströmen soll.

Der Durchflußaufnehmer umfaßt ein Meßrohr 100 zum Führen der zu messenden Flüssigkeit, eine am Meßrohr 100 befestigte Magnetfeld-Anordnung 200 zum Erzeugen eines die Flüssigkeit innerhalb des Meßrohrs 100 durchsetzenden Magnetfelds sowie einer ebenfalls am Meßrohr 100 angebrachte Meßelektroden-Anordnung 300.

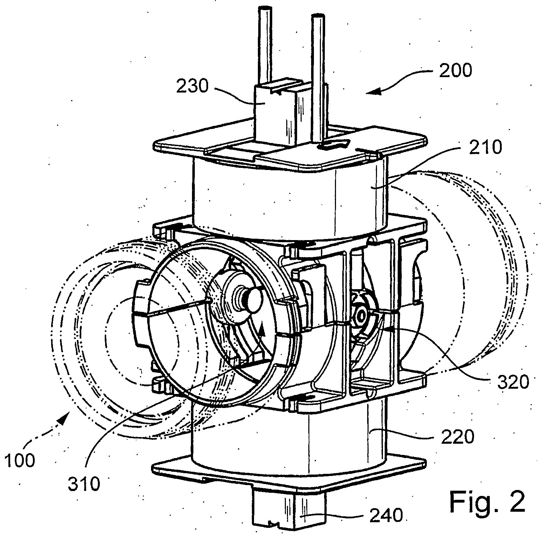

Die Magnetfeld-Anordnung 200 des Durchflußaufnehmers 1 gemäß Fig. 1 weist, wie auch in Fig. 2 gezeigt, eine am Meßrohr 100 angeordnete erste Feldspule 210 und eine am Meßrohr 100 angeordnete zweite Feldspule 220 auf. Die Magnetfeld-Anordnung 200 dient, wie bereits erwähnt, dazu, im Betrieb ein die Rohrwand und die Flüssigkeit durchsetzendes Magnetfeld zu erzeugen. Dieses entsteht, wenn in den miteinander verschalteten Feldspulen 210, 220 ein Erregerstrom in geeigneter Weise, z.B. pulsierend oder getaktet, fließen gelassen wird.

In Fig. 2 ist gezeigt, daß die Feldspulen 210, 220, wie bei derartigen Magnetfeld-Anordnungen üblich, jeweils um einen Spulenkern 230 bzw. 240 gewickelt sind, der i.a. weichmagnetisch ist, wobei die Spulenkerne in der dem Fachmann bekannten mit Polschuhen zusammenwirken können, vgl. z.B. die US-A 55 40 103. Die Feldspulen können aber auch sogenannte Luftspulen ohne Spulenkern sein.

Die Magnetfeld-Anordnung 200 ist bevorzugt so ausgeführt, insb. sind die beiden Feldspulen 210, 220 so geformt und dimensioniert, daß das damit erzeugte Magnetfeld innerhalb des Meßrohrs 100 zumindest bezüglich eines ersten Durchmessers symmetrisch, insb. rotationssymmetrisch, ausgebildet ist. Dazu sind die beiden, insb. zylindrisch geformten, Feldspulen 210, 220 auf dem ersten Durchmesser des Meßrohrs 100 einander diametral gegenüberliegend angeordnet.

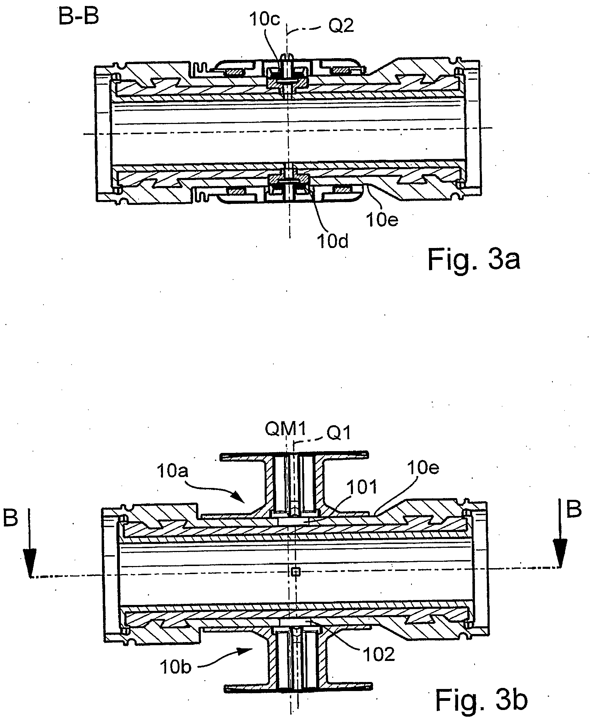

Wie in Fig. 1, 2 und 3a schematisch dargestellt, weist die Meßelektroden-Anordnung 300 eine erste und eine zweite Meßelektrode 310, 320 auf, wobei beide Meßelektroden 310, 320 bevorzugt entlang eines zum ersten Durchmesser im wesentlichen senkrecht verlaufenden zweiten Durchmessers des Meßrohrs 100 einander diametral gegenüberliegend angeordnet sind. Die beiden Meßelektroden 310, 320 dienen dazu, elektrische Potentiale abzugreifen, die im Betrieb des Durchflußmessers aufgrund des Faraday-Gesetzes in der strömenden Flüssigkeit induziert wird. In Fig. 2 bzw.3a sind die Meßelektroden 310, 320 als galvanische, also betriebsgemäß die Flüssigkeit berührende, Meßelektroden gezeigt. Es können jedoch auch zwei kapazitive, also z.B. innerhalb der Rohrwand des Meßrohrs 100 angeordnete, Meßelektroden verwendet werden.

Zur Vermeidung eines Kurzschließens von im Fluid induzierten Spannungen ist ein die Flüssigkeit berührendes Innenteil des Meßrohrs 100 elektrisch nicht-leitend ausgeführt. Metall-Meßrohre sind dafür üblicherweise innen mit einer elektrisch nicht-leitenden Schicht, z.B. aus Hartgummi, Polyfluorethylen, Polyfluoralkoxy-Copolymer etc., versehen und auch i.a. nicht-ferromagnetisch, vgl. Fig. 3a, 3b; bei vollständig aus einem Kunststoff oder aus einer Keramik, insb. aus Aluminiumoxid-Keramik, bestehenden Meßrohren ist die elektrisch nichtleitende Schicht demgegenüber nicht erforderlich.

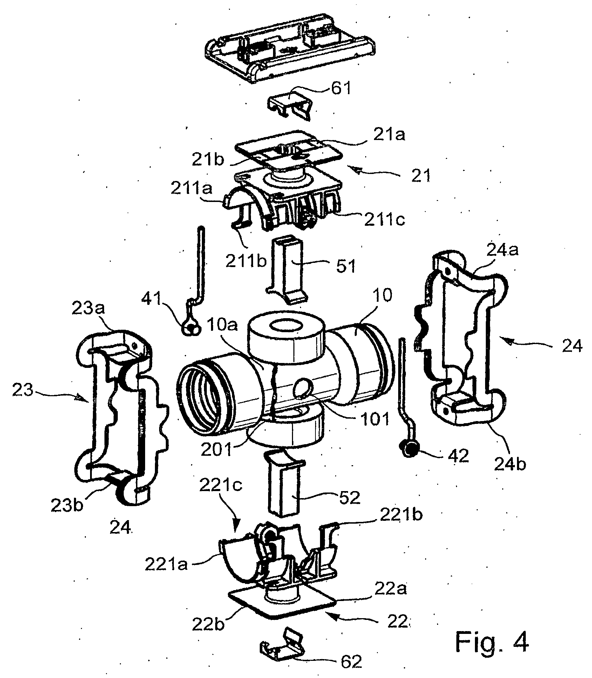

Erfindungsgemäß ist der Durchflußaufnehmer, wie in der Fig. 4 anhand einer Explosionsdarstellung angedeutet, durch Montage einzelner vorab konfektionierter System-Elemente eines Montagepaketes hergestellt. Das Montagepaket für die Herstellung des Durchflußaufnehmers umfaßt als System-Elemente wenigstens ein Meßrohr-Element 10 sowie ein erstes Spulen-Element 21 und ein zweites Spulen-Element 22 für die Montage der Magnetfeld-Anordnung 200. Das Meßrohr-Element 10 kann in der dem Fachmann bekannten, beispielsweise auf die in der EP-A 1 039 269, der EP-A 581 017, der US-A 43 29 879 oder der US-A 56 64 315 vorgeschlagene Weise vorgefertigt werden.

Darüber hinaus sind gemäß einer bevorzugten Weiterbildung der Erfindung ein erstes Feldrückführ-Element 23 und ein zweites Feldrückführ-Element 24 als weitere System-Elemente für die Montage der Magnetfeld-Anordnung 200 vorgesehen. Des weiteren kann das Montagepaket auch ein erstes Elektroden-Element 41 und ein zweites Elektroden-Element 42 für die Montage der Meßelektroden-Anordnung 300 umfassen.

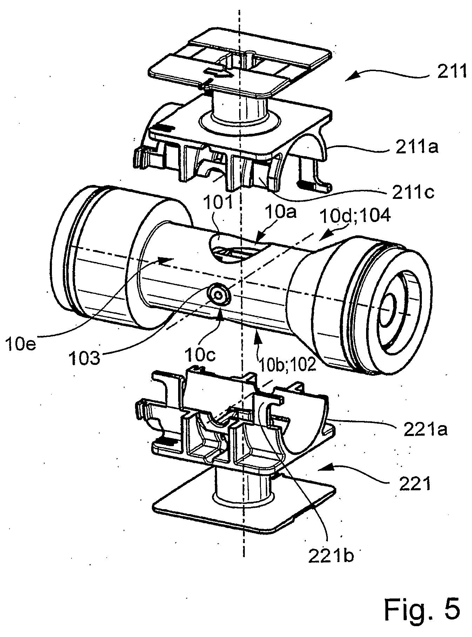

Beim erfindungsgemäßen Meßrohr-Element 10 sind gemäß einer anderen, in Fig. 5 gezeigten, bevorzugten Weiterbildung der Erfindung Einbaustellen für wenigstens ein Paar zusammengehöriger, komplementärer System-Elemente, z.B. ein erstes Paar Einbaustellen 10a, 10b für die beiden Spulen-Elemente 21, 22 und/oder ein zweites Paar Einbaustellen 10c, 10d für die beiden ElektrodenElemente 41, 42, vorgesehen. Wie in den Fig. 3a, 3b, 4 oder 5 dargestellt, sind wenigstens zwei paarweise zusammengehörige Einbaustellen 10a, 10b; 10c, 10d des Meßrohr-Elements 10 jeweils auf einem im wesentlichen zylindrischen Abschnitt eines Mantels 10e des Meßrohr-Elements 10 angeordnet. Im hier gezeigten Ausführungsbeispiel sind wenigstens zwei paarweise zusammengehörige Einbaustellen 10a, 10b; 10c, 10d in einfacher Weise durch jeweils eine in den Mantel des Meßrohr-Elements 10 eingebrachte Aussparung 101, 102; 103, 104, z.B. eine durchgehende Öffnung, gebildet,

Nach einer anderen bevorzugten Ausgestaltung der Erfindung weist jedes der beiden Spulen-Elemente 21, 22 jeweils einen von Spulendraht umwickelten Wicklungskörper 211, 221 auf. Als Spulendraht kann hierbei beispielsweise herkömmlicher, mit Isolierlack oder einer anderen geeigneten Isolierschicht überzoger Kupferdraht, Kupferlitze oder ein anderer elektrisch leitfähiger Draht dienen.

Ferner sind beim Montagepaket weiters ein erstes Spulenkern-Element 51 für das Spulen-Element 21 und ein zweites Spulenkern-Element 52 für das Spulen-Element 22 vorgesehen. Im eingebauten Zustand sind Spulenkern-Element 51, 52 koaxial so zum jeweils zugehörigen ersten bzw. zweiten Wicklungskörper 211, 221 angeordnet, daß sie zumindest abschnittsweise vom Spulendraht des jeweiligen Spulen-Elements 21 bzw. 22 umgeben sind.

Gemäß einer Weiterbildung dieser Ausgestaltung der Erfindung ist jedem der Wicklungskörper 211, 221 an jeweilis einem Ende ein das jeweilige Spulen-Element 21, 22 jeweils an die zugehörige Einbaustelle des Meßrohr-Elements 10 adaptierender Spulensattel 211 a, 221 a angeformt.

Zur Fixierung der Spulen-Elemente 21, 22 sind jedem der Spulensattel 211 a, 221 a wenigstens ein Rasthaken 211b bzw. 221 b angeformt sowie eine mit dem jeweils wenigstens einen Rasthaken des jeweils anderen Spulensattels korrespondierende Ausnehmung 211 c bzw. 221 c eingeformt. Die Rasthaken 211 b, 221 b und die jeweils zugeordnete Ausnehmung 221 c bzw. 211 c sind so angeordnet und ausgebildet, daß im zusammengebauten Zustand des Durchflußaufnehmers 1 jeweils der wenigstens eine Rasthaken des einen Spulensattels von der jeweils korrespondierenden Ausnehmung des jeweils anderen Spulensattels aufgenommem und so beide im wesentlichen formschlüssig in einandergreifen; vgl. hierzu insb. Fig. 1 in Zusammenschau mit Fig. 2.

Bei der Verwendung der Feldrückführ-Elemente 23, 24 sind, an jedem der wenigstens zwei Spulen-Elemente 21, 22 jeweils eine erste Auflagefläche 21 a bzw. 22a sowie eine zweite Auflagefläche 21 b bzw. 22b für die Feldrückführ-Elemente 23, 24 vorgesehen. Die Auflageflächen 21 a, 22a, 21 b, 22b und die wenigstens zwei Feldrückführ-Elemente 23, 24 sind so ausgebildet ist, daß die beiden Feldrückführ-Elemente 23, 24 im eingebauten Zustand auf jeweils einer Auflagefläche 21 a, 22a bzw. 21 b, 22b der beiden Spulen-Elemente 21, 22 aufliegend, zumindest abschnittsweise elastisch gespannt sind und so die Spulen-Elemente 21, 22, wie in Fig. 1 gezeigt, mittels der Feldrückführ-Elemente 23, 24 gegen das Meßrohr-Element 10 gedrückt gehalten werden.

Dies wird beim hier gezeigten Ausführungsbeispiel dadurch erreicht, daß dem, vorzugsweise im wesentlichen ringförmig ausgebildeten, Feldrückführ-Element 23 ein mit der Auflagefläche 21 a des Spulen-Elements 21 korrespondierendes erstes Federblech 23a und ein mit der Auflagefläche 22a des Spulen-Elements 22 korrespondierendes zweites Federblech 23b angeformt ist. In analoger Weise weist das zum ersten Feldrückführ-Element 23 vorzugsweise im wesentlichen identische zweite Feldrückführ-Element 24 ein mit der Auflagefläche 21 b des Spulen-Elements 21 korrespondierendes erstes Federblech 24a und ein mit der Auflagefläche 22b des Spulen-Elements 22 korrespondierende zweites Federblech 24b auf.

In vorteilhafter Weise können die, bevorzugt einstückig realisierten, Feldrückführ-Elemente 23, 24 beispielsweise als Stanz-Biege-Teile maschinell vorgefertigt sein, wobei dann jedes der Rückführ-Elemente 23, 24 praktisch als in sich geschlossenes Band ausgebildet ist.

Für den oben beschriebenen Fall, daß die Spulen-Elemente 21, 22 Wicklungskörper 211, 221 für Spulendrähte umfassen,sind nach einer bevorzugten Ausgestaltung der Erfindung bei jedem der beiden Wicklungskörper 211, 221 jeweils eine erste Auflagefläche 211 b, 221 b für das erste Feldrückführ-Element 23 und jeweils eine zweite Auflagefläche 211 c, 221 c für das zweite Feldrückführ-Element 24 angeformt.

Für den oben beschriebenen Fall, daß das Montagepaktet in die Wicklungskörper einsetzbare Spulenkerne umfaßt, sind weiters ein erstes Befestigungs-Element 61 sowie ein zweites Befestigungs-Element 62 vorgesehen. Die Befestigungs-Elemente 61, 62 sind in einfacher Weise, wie in Fig. 1 und 2 dargestellt, als elastisch verformbare Klammern ausgebildet, die die beiden Feldrückführ-Elemente im eingebauten Zustand jeweils gegen die Spulenkerne gedrückt halten, so daß Feldrückführ- und Spulenkern-Elemente 23, 24, 51, 52 kraftschlüssig miteinander verbunden und gleichzeitig magnetisch miteinander gekoppelt sind.

Nach einer weiteren bevorzugten Weiterbildung der Erfindung sind die beiden Spulen-Elemente 21, 22 mittels wenigstens eines gemeinsamen, durchgehenden Spulendraht 201 verbunden, der sowohl wenigstens eine Wicklung des ersten Spulen-Elements 21 als auch wenigstens eine Wicklung des zweiten Spulen-Elements 22 bildet. In einer vorteilhaften Ausgestaltung der Erfindung ist der gemeinsame Spulendraht 201 auf die beiden Wicklungskörper 211, 221 der Spulen-Elemente 21 bzw. 22 aufgewickelt, daß beide Enden am Spulen-Element 21, beispielsweise am Wicklungskörper 211, fixierbar sind. Die für diesen Fall zwangsweise im Bereich zwischen den beiden Spulen-Elementen 21, 22 verlaufenden, hin- bzw. rückführenden, zwei Spulendrahtabschnitte sind vorzugsweise miteinander, z.B. nach der Art eines Twisted-Pair-Kabels, verdrillt.

Insbesondere für den Fall, daß der Durchflußaufnehmer 1 eine einzige vordefinierte Meßrichtung aufweisen soll, sind nach einer bevorzugten Weiterbildung der Erfindung wenigstens zwei der oben bereits erwähnten, paarweise zusammengehörige Einbaustellen 10a, 10b bzw. 10c, 10d und wenigstens zwei paarweise zusammengehörige System-Elemente, z.B. die beiden Spulen-Elemente 21, 22, so ausgebildet oder geformt, daß in jede der wenigstens zwei Einbaustellen 10a, 10b bzw. 10c, 10d wenigstens eines von zwei paarweise zusammengehörigen System-Elementen 21, 22 bzw. 41, 42 in nur einer einzigen vorbestimmten Einbaulage und/oder mit einer einzigen vorbestimmten Orientierung einsetzbar ist.

Nach einer bevorzugten Ausgestaltung dieser Weiterbildung der Erfindung sind dafür die beiden zusammengehörigen, insb. einander diametral gegenüberliegenden, Aussparungen 101, 102 ferner so am Meßrohr-Element 10 angeordnet, daß sie mit einer gedachten ersten Querschnittsachse Q1 des Meßrohr-Elements 10 fluchten, die zu einer gedachten ersten Mittel-Querschnittsachse QM1 des zylindrischen Abschnitts 10e parallel verläuft und von dieser gedachten Mittel-Querschnittsachse QM1 seitlich beabstandet ist. Darüber hinaus können die beiden Aussparungen 103, 104 so am Meßrohr-Element 10 angeordnet sein, daß sie mit einer die erste Querschnittsachse Q1 im wesentlichen senkrecht schneidenden gedachten zweiten Querschnittsachse Q2 des Meßrohr-Elements 10 fluchten. Dementsprechend weist das Meßrohr-Element 10 dazu zumindest eine erste Trägheitshauptachse auf, bezüglich der es im wesentlichen asymmetrisch ausgebildet ist. In vorteilhafter Weise kann das Meßrohr-Element 10 ferner zumindest eine zweite Trägheitshauptachse aufweisen, bezüglich der es ebenfalls asymmetrisch ausgebildet ist.

Diese Ausgestaltungen des Meßrohr-Elements 10, insb. in Kombination mit den erfindungsgemäßen Ausgestaltungen der zugehörigen Einbaustellen, ermöglichen es, bereits zu Beginn der Montage eine sehr einfache und unzweideutige Signalisierung der Meßrichtung sicherzustellen, die, bedingt durch das Meßprinzip, mit den Einbaulagen und, damit einhergehend, mit der dem Einbau und der Montage nachfolgenden Verschaltung der einzelnen System-Elemente, insb. der Spulen-Elemente 21, 22, korrespondiert.

## Patentansprüche

1. Montagepaket für die Herstellung eines magnetisch-induktiven Durchflußaufnehmers (1), insb. einer Magnetfeld-Anordnung (200), welches Montagepaket zumindest folgende System-Elemente (10, 21, 22, 23, 24, 41, 42, 51, 52) umfaßt:
- ein Meßrohr-Element (10) sowie
- ein erstes und ein zweites Spulen-Element (21, 22),
- wobei am Meßrohr-Element (10) Einbaustellen (10a, 10b; 10c, 10d) für wenigstens ein Paar zusammengehöriger, komplementärer System-Elemente (21, 22; 41, 42) vorgesehen sind, und
- wobei jedes der beiden Spulen-Elemente (21, 22) jeweils einen von Spulendraht umwickelten Wicklungskörper (211, 221) aufweist, wobei jedem der Wicklungskörper (211, 221) an einem Ende ein das jeweilige Spulen-Element (21, 22) jeweils an die zugehörige Einbaustelle des Meßrohr-Elements (10) adaptierender Spulensattel (211 a, 221 a) angeformt ist,
**dadurch gekennzeichnet,**
- **dass** zur Fixierung der Spulen-Elemente (21, 22) jedem der Spulensattel (211 a, 221 a) wenigstens ein Rasthaken (211 b, 221 b) angeformt sowie eine mit dem jeweils wenigstens einen Rasthaken des jeweils anderen Spulensattels korrespondierende Ausnehmung (211 c, 221 c) eingeformt sind, und
- **dass** die Rasthaken (211 b, 221 b) und die jeweils zugeordnete Ausnehmung (221 c, 211 c) so angeordnet und ausgebildet sind, daß im zusammengebauten Zustand des Durchflußaufnehmers (1) jeweils der wenigstens eine Rasthaken des einen Spulensattels von der jeweils korrespondierenden Ausnehmung des jeweils anderen Spulensattels so aufgenommen ist, daß Rasthaken und korrespondierende Aufnehmung im wesentlichen formschlüssig ineinander greifen.

2. Montagepaket nach Anspruch 1, **dadurch gekennzeichnet, dass** das Montagepaket weiters ein erstes und ein zweites Feldrückführ-Element (23, 24) umfaßt, wobei am ersten und am zweiten Spulen-Element (21, 22) Auflageflächen für die Feldrückführ-Elemente (23, 24) vorgesehen sind und wobei jedes der wenigstens zwei Feldrückführ-Elemente (23, 24) so ausgebildet ist, daß es im eingebauten Zustand auf jeweils einer Auflagefläche (211b, 221 b, 211 c, 221 c) sowohl des ersten als auch des zweiten Spulen-Elements (21, 22) aufliegend, zumindest abschnittsweise elastisch gespannt ist und so die Spulen-Elemente (21, 22) mittels der Feldrückführ-Elemente (23, 24) gegen das Meßrohr-Element (10) gedrückt gehalten werden.

3. Montagepaket nach Anspruch 1 oder 2, **dadurch gekennzeichnet, dass** die beiden Spulen-Elemente (21, 22) wenigstens einen durchgehenden, gemeinsamen Spulendraht (201) aufweisen, der sowohl wenigstens eine Wicklung des ersten Spulen-Elements (21) als auch wenigstens eine Wicklung des zweiten Spulen-Elements (22) bildet.

4. Montagepaket nach einem der vorherigen Ansprüche, **dadurch gekennzeichnet, dass** wenigstens zwei paarweise zusammengehörige Einbaustellen (10a, 10b; 10c, 10d) und wenigstens zwei paarweise zusammengehörige System-Elemente (21, 22; 41, 42) so ausgebildet oder geformt sind, daß in jede der wenigstens zwei Einbaustellen (10a, 10b; 10c, 10d) wenigstens eines von zwei paarweise zusammengehörigen System-Elementen (21, 22; 41, 42) in nur einer einzigen vorbestimmten Einbaulage und/oder mit einer einzigen vorbestimmten Orientierung einsetzbar ist.

5. Montagepaket nach einem der vorherigen Ansprüche, **dadurch gekennzeichnet, dass** das Meßrohr-Element (10) zumindest eine Trägheitshauptachse aufweist, bezüglich der es im wesentlichen asymmetrisch ausgebildet ist.

6. Montagepaket nach einem der vorherigen Ansprüche, **dadurch gekennzeichnet, dass** wenigstens zwei paarweise zusammengehörige Einbaustellen (10a, 10b; 10c, 10d) des Meßrohr-Elements (10) jeweils auf einem im wesentlichen zylindrischen Abschnitt eines Mantels des Meßrohr-Elements (10) angeordnet sind und bei dem wenigstens diese zwei paarweise zusammengehörige Einbaustellen (10a, 10b; 10c, 10d) jeweils eine in den Mantel des Meßrohr-Elements (10) eingebrachte Aussparung (101, 102; 103, 104), insb. eine Öffnung, aufweisen, wobei die beiden, insb. einander diametral gegenüberliegenden, Aussparungen (101, 102; 103, 104) mit einer gedachten Querschnittsachse des Meßrohr-Elements (10) fluchten, die zu einer gedachten Mittel-Querschnittsachse des zylindrischen Abschnitts parallel verläuft und von dieser gedachten Mittel-Querschnittsachse seitlich beabstandet ist.

7. Montagepaket nach einem der vorherigen Ansprüche, **dadurch gekennzeichnet, dass** das Meßrohr-Element zumindest eine erste Einbaustelle für das erste Spulen-Element (21) und eine zweite Einbaustelle für das zweite Spulen-Element (22) aufweist.

8. Montagepaket gemäß einem der Ansprüche 2 bis 7, **dadurch gekennzeichnet, dass**
- dem ersten sowie dem zweiten Wicklungskörper (211, 221) jeweils eine erste Auflagefläche (211 b, 221 b) für das erste Feldrückführ-Element (23) und
- dem ersten sowie dem zweiten Wicklungskörper (211, 221) jeweils eine zweite Auflagefläche (211c, 221 c) für das zweite Feldrückführ-Element (24) angeformt sind.

9. Montagepaket nach einem der vorherigen Ansprüche, **dadurch gekennzeichnet, dass** das Meßrohr-Element (10) zumindest zwei Trägheitshauptachsen aufweist, bezüglich denen es asymmetrisch ausgebildet ist.

10. Montagepaket nach einem der vorherigen Ansprüche, **dadurch gekennzeichnet, dass** das Montagepaket als weitere System-Elemente ferner ein erstes und ein zweites Elektroden-Element (41, 42) umfaßt.

11. Montagepaket nach einem der vorherigen Ansprüche, **dadurch gekennzeichnet, dass** das Montagepaket weiters ein erstes und ein zweites Spulenkern-Element (51, 52) umfaßt.

12. Montagepaket nach Anspruch 2 sowie einem der Ansprüche 3 bis 11, **dadurch gekennzeichnet, dass** jedes der wenigstens zwei Rückführ-Elemente (23, 24) einstückig ausgebildet ist.

13. Montagepaket nach Anspruch 2 sowie einem der Ansprüche 3 bis 12, **dadurch gekennzeichnet, dass** jedes der wenigstens zwei Rückführ-Elemente (23, 24) im wesentlichen ringförmig ausgebildet ist.

14. Montagepaket nach Anspruch 13, **dadurch gekennzeichnet, dass** jedes der wenigstens zwei Rückführ-Elemente (23, 24) als in sich geschlossenes Band ausgebildet ist.

15. Montagepaket nach Anspruch 2 sowie einem der Ansprüche 3 bis 14, **dadurch gekennzeichnet, dass** die wenigstens zwei Rückführ-Elemente (23, 24) mittels eines ersten Befestigungs-Element (61) mit dem ersten Spulenkern-Element (51) und mittels eines zweiten Befestigungs-Elements (62) mit dem zweiten Spulenkern-Element (52) kraftschlüssig verbunden sind.

16. Montagepaket nach Anspruch 4 sowie einem der Ansprüche 5 bis 17, **dadurch gekennzeichnet, dass** wenigstens zwei paarweise zusammengehörige Einbaustellen (10a, 10b) und wenigstens zwei paarweise zusammengehörige System-Elemente (21, 22) so ausgebildet oder geformt sind, daß das jeweils erste der beiden System-Elemente (21) nur in eine erste der Einbaustellen (10a) und das jeweils zweite der beiden System-Elemente (22) nur in eine zweite der Einbaustellen (10b) einsetzbar sind.

## Claims

1. Mounting package for the production of an electromagnetic flow sensor (1), particularly of a magnetic field arrangement (200), said package comprising the following system elements at least (10, 21, 22, 23, 24, 41, 42, 51, 52) :
- a measuring tube element (10), and
- a first and a second coil element (21, 22),
- wherein installation points (10a, 10b ; 10c, 10d) are provided on the measuring tube element (10) for at least one pair of associated, complementary system elements (21, 22 ; 41, 42), and
- wherein each of the two coil elements (21, 22) has a winding body (211, 221) covered with coil wire, a coil carrier (211 a, 221 a) being formed at an end of each of the winding bodies (211, 221), adapting the relevant coil element (21, 22) to the corresponding installation point of the measuring tube element (10),
**characterized in that**
- in order to fix the coil elements (21, 22) in place, at least one latch (211 b, 221 b) is formed on each of the coil carriers (211 a, 221 b), as well as a recess (211 c, 221 c) corresponding to the at least one latch of the other coil carrier in question, and
- **in that** the latches (211 b, 221 b) and the assigned recess (221 c, 211 c) are arranged and designed in such a way that when the flow sensor (1) is assembled, in each case, the at least one latch of the one coil carrier is accommodated into the corresponding recess of the other coil carrier such that the latch and the corresponding recess interlock essentially with positive locking.

2. Mounting package as claimed in Claim 1, **characterized in that** the mounting package further comprises a first and second field return element (23, 24), wherein support surfaces for the field return elements (23, 24) are provided on the first and second coil element (21, 22), and wherein each of the at least two field return elements (23, 24) is designed in such a way that, in the installed state resting on a support surface (211 b, 221 b, 211 c, 221 c) of both the first and the second coil element (21, 22), it is elastically tensioned at least in sections and in this way the coil elements (21, 22) are maintained pressed against the measuring tube element (10) via the field return elements (23, 24).

3. Mounting package as claimed in Claim 1 or 2, **characterized in that** the two coil elements (21, 22) have at least one continuous shared coil wire (201) forming at least one winding of the first coil element (21) and at least one winding of the second coil element (22).

4. Mounting package as claimed in one of the previous claims, **characterized in that** at least two installation points, belonging as a pair, (10a, 10b ; 10c, 10d) and at least two system elements, belonging as a pair, (21, 22 ; 41, 42) are designed or shaped in such a way that at least one of two system elements, belonging as a pair, (21, 22 ; 41, 42), can be inserted in each of the at least two installation points (10a, 10b ; 10c, 10d) in just one single predefined installation position and/or with a single predefined orientation.

5. Mounting package as claimed in one of the previous claims, **characterized in that** the measuring tube element (10) has at least one principle axis of inertia in relation to which it is designed in an essentially asymmetrical manner.

6. Mounting package as claimed in one of the previous claims, **characterized in that** at least two installation points, belonging as a pair, (10a, 10b ; 10c, 10d) of the measuring tube element (10) are arranged in each case on an essentially cylindrical section of a sheath of the measuring tube element (10), and where at least these two installation points, belonging as a pair, (10a, 10b ; 10c, 10d) each has a recess (101, 102 ; 103, 104), particularly an opening, realized in the sheath of the measuring tube element (10), wherein the two recesses (101, 102 ; 103, 104), especially diametrically opposed recesses, are flush with an imaginary cross-sectional axis of the measuring tube element (10), said axis running parallel to an imaginary middle cross-sectional axis of the cylindrical section and laterally spaced from this imaginary middle cross-sectional axis.

7. Mounting package as claimed in one of the previous claims, **characterized in that** the measuring tube element has at least a first installation point for the first coil element (21) and a second installation point for the second coil element (22).

8. Mounting package as claimed in one of the Claims 2 to 7, **characterized in that**
- a first support surface (211 b, 221 b) for the first field return element (23) is formed in each case on the first and the second winding body (211, 221), and
- a second support surface (211 c, 221 c) for the second field return element (24) is formed in each case on the first and the second winding body (211, 221).

9. Mounting package as claimed in one of the previous claims, **characterized in that** the measuring tube element (10) has at least two principle axes of inertia, in relation to which it is designed in an asymmetrical manner.

10. Mounting package as claimed in one of the previous claims, **characterized in that** further comprises a first and a second electrode element (41, 42) as additional system elements.

11. Mounting package as claimed in one of the previous claims, **characterized in that** the mounting package further comprises a first and a second coil core element (51,52).

12. Mounting package as claimed in Claim 2 as well as one of the Claims 3 to 11, **characterized in that** each of the at least two return elements (23, 24) is designed as one piece.

13. Mounting package as claimed in Claim 2 as well as one of the Claims 3 to 12, **characterized in that** each of the at least two return elements (23, 24) has an essentially annular design.

14. Mounting package as claimed in Claim 13, **characterized in that** each of the at least two return elements (23, 24) is designed as a closed loop band.

15. Mounting package as claimed in Claim 2 as well as one of the Claims 3 to 14, **characterized in that** the at least two return elements (23, 24) are connected, in a force-lock manner, to the first coil core element (51) via a first fastening element (61) and to the second coil core element (52) via a second fastening element (62).

16. Mounting package as claimed in Claim 4 as well as one of the Claims 3 to 15, **characterized in that** at least two installation points, belonging as a pair, (10a, 10b) and at least two system elements, belonging as a pair, (21, 22) are designed or shaped in such a way that the first of the two system elements (21) can only be inserted in a first of the installation points (10a) and the second of the two system elements (22) can only be inserted in a second of the installation points (10b).

## Revendications

1. Ensemble de montage servant à la fabrication d'un débitmètre magnéto-inductif (1), notamment d'une configuration de champ magnétique (200), lequel ensemble de montage comprend au moins les éléments système suivants (10, 21, 22, 23, 24, 41, 42, 51, 52) :
- un élément de tube de mesure (10) ainsi que
- un premier et un deuxième élément de bobine (21, 22),
- pour lequel sont prévus, sur l'élément de tube de mesure (10), des zones de montage (10a, 10b ; 10c, 10d) pour au moins une paire associée d'éléments système complémentaires (21, 22 ; 41, 42), et
- pour lequel chacun des deux éléments de bobine (21, 22) comporte un corps d'enroulement (211, 221) entouré de fil à bobiner, un porte-bobine (211 a, 221 a) étant formé à une extrémité de chacun des corps d'enroulement (211, 221), adaptant l'élément de bobine (21, 22) respectif à la zone de montage correspondante de l'élément de tube de mesure (10),
**caractérisé**
- **en ce que** pour la fixation des éléments de bobine (21, 22) est formé au moins un crochet d'encliquetage (211 b, 221 b) pour chaque porte-bobine (211 a, 221 b), ainsi qu'un évidement (211 c, 221c) correspondant à l'au moins un crochet d'encliquetage de l'autre porte-bobine, et
- **en ce que** les crochets d'encliquetage (211 b, 221 b) et les évidements (221 c, 211 c) correspondants sont disposés et conçus de telle sorte qu'à l'état assemblé du débitmètre (1), l'au moins un crochet d'encliquetage de l'un des porte-bobine s'insère dans l'évidement correspondant de l'autre porte-bobine de telle manière que le crochet d'encliquetage et l'évidement correspondant sont pour l'essentiel en prise l'un dans l'autre au moyen d'une liaison auto-bloquante.

2. Ensemble de montage selon la revendication 1, **caractérisé en ce que** l'ensemble de montage comprend en outre un premier et un deuxième élément de retour de champ (23, 24), des surfaces d'appui pour les éléments de retour de champ (23, 24) étant prévues sur le premier et le deuxième élément de bobine (21, 22), et chacun des éléments de retour de champ (23, 24), qui sont au moins au nombre de deux, étant conçu de telle sorte qu'à l'état monté, ceux-ci sont serrés partiellement de façon élastique en reposant chacun sur une surface d'appui (211 b, 221 b, 211 c, 221 c) à la fois du premier et du deuxième élément de bobine (21, 22), si bien que les éléments de bobine (21, 22) sont maintenus plaqués contre l'élément de tube de mesure (10) au moyen des éléments de retour de champ (23, 24).

3. Ensemble de montage selon la revendication 1 ou 2, **caractérisé en ce que** les deux éléments de bobine (21, 22) comportent au moins un fil à bobiner (201) formant à la fois au moins un enroulement du premier élément de bobine (21) et au moins un enroulement du deuxième élément de bobine (22).

4. Ensemble de montage selon l'une des revendications précédentes, **caractérisé en ce qu'**au moins deux zones de montage associées par paires (10a, 10b ; 10c, 10d) et **en ce qu'**au moins deux éléments système associés par paires (21, 22 ; 41, 42) sont conçus ou formés de telle sorte que dans les zones de montage (10a, 10b ; 10c, 10d), qui sont au moins au nombre de deux, au moins l'un parmi deux éléments système associés par paires (21, 22 ; 41, 42) puisse être inséré dans une unique position de montage prédéfinie et/ou selon une unique orientation prédéfinie.

5. Ensemble de montage selon l'une des revendications précédentes, **caractérisé en ce que** l'élément de tube de mesure (10) présente au moins un axe principal d'inertie, par rapport auquel il est conçu pour l'essentiel de façon asymétrique.

6. Ensemble de montage selon l'une des revendications précédentes, **caractérisé en ce que** sont disposées au moins deux zones de montage associées par paires (10a, 10b ; 10c, 10d) de l'élément de tube de mesure (10) respectivement sur une partie pour l'essentiel cylindrique de l'enveloppe de l'élément de tube de mesure (10), et pour lequel au moins ces deux zones de montage associées par paires (10a, 10b ; 10c, 10d) présentent chacune un évidement (101, 102 ; 103, 104), notamment une ouverture, réalisé dans l'enveloppe de l'élément de tube de mesure (10), les deux évidements (101, 102 ; 103, 104), notamment diamétralement opposés, affleurant à un axe de section transversale imaginaire de l'élément de tube de mesure (10), lequel axe est parallèle à un axe de section transversale médian imaginaire de la partie cylindrique et espacé latéralement par rapport à cet axe de section transversale médian imaginaire.

7. Ensemble de montage selon l'une des revendications précédentes, **caractérisé en ce que** l'élément de tube de mesure (10) comporte au moins une première zone de montage pour le premier élément de bobine (21) et une deuxième zone de montage pour le deuxième élément de bobine (22).

8. Ensemble de montage selon l'une des revendications 2 à 7, **caractérisé**
- **en ce qu'**est formée, sur le premier et sur le deuxième corps d'enroulement (211, 221), respectivement une première surface d'appui (211 b, 221 b) pour le premier élément de retour de champ (23) et
- **en ce qu'**est formée, sur le premier et sur le deuxième corps d'enroulement (211, 221), respectivement une deuxième surface d'appui (211 c, 221 c) pour le deuxième élément de retour de champ (24).

9. Ensemble de montage selon l'une des revendications précédentes, **caractérisé en ce que** l'élément de tube de mesure (10) présente au moins deux axes principaux d'inertie, par rapport auxquels il est conçu de façon asymétrique.

10. Ensemble de montage selon l'une des revendications précédentes, **caractérisé en ce que** l'ensemble de montage comprend, en tant qu'éléments système supplémentaires, un premier et un deuxième élément d'électrode (41, 42).

11. Ensemble de montage selon l'une des revendications précédentes, **caractérisé en ce que** l'ensemble de montage comporte en outre un premier et un deuxième élément de noyau de bobine (51, 52).

12. Ensemble de montage selon la revendication 2 ainsi que l'une des revendications 3 à 11, **caractérisé en ce que** chacun des au moins deux éléments de retour de champ (23, 24) est conçu en une seule pièce.

13. Ensemble de montage selon la revendication 2 ainsi que l'une des revendications 3 à 12, **caractérisé en ce que** chacun des au moins deux éléments de retour de champ (23, 24) est conçu pour l'essentiel de façon annulaire.

14. Ensemble de montage selon la revendication 13, **caractérisé en ce que** chacun des au moins deux éléments de retour de champ (23, 24) est conçu en tant que bande fermée.

15. Ensemble de montage selon la revendication 2 ainsi que l'une des revendications 3 à 14, **caractérisé en ce que** les au moins deux éléments de retour de champ (23, 24) sont reliés de façon rigide, au moyen d'un premier élément de fixation (61), avec le premier élément de noyau de bobine (51) et, au moyen d'un deuxième élément de fixation (62), avec le deuxième élément de noyau de bobine (52).

16. Ensemble de montage selon la revendication 4 ainsi que l'une des revendications 5 à 15, **caractérisé en ce qu'**au moins deux zones de montage associées par paires (10a, 10b) et au moins deux éléments système associés par paires (21, 22) sont conçus ou formés de telle sorte que le premier des deux éléments système (21) ne puisse être inséré que dans une première zone de montage (10a) parmi les zones de montage et que le deuxième des deux éléments système (22) ne puisse être inséré que dans une deuxième zone de montage (10b) parmi les zones de montage.
